# EUROPEAN PATENT APPLICATION

(11) **EP 4 132 019 A1**
(43) Date of publication of application: **08.02.2023**
(21) Application number: 21776475.2
(22) Date of filing: 25.03.2021
(51) Int. Cl.: H04W 4/06

(54) **SERVICE RECEIVING METHOD, SERVICE CONFIGURATION METHOD, TERMINAL AND NETWORK SIDE DEVICE**

(30) Priority: 27.03.2020 CN 202010231298
(71) Applicant: Vivo Mobile Communication Co., Ltd., Dongguan, Guangdong 523863 (CN)
(72) Inventor: WU, Yumin, Dongguan, Guangdong 523863 (CN)
(74) Representative: Chas. Hude A/S
(86) International application number: PCT/CN2021/082950
(87) International publication number: WO 2021/190589

(57) **Abstract**

The present invention provides a service receiving method, a service configuration method, a terminal, and a network-side device. The service receiving method is applied to the terminal, including: receiving configuration information about a frequency range in which at least one first service is located; and in a case that a target first service in the at least one first service needs to be received, receiving the target first service in a current operating frequency range or by switching from the current operating frequency range to a frequency range in which the target first service is located.

## Description

### CROSS-REFERENCE TO RELATED APPLICATIONS

This application claims priority to Chinese Patent Application No. 202010231298.2, filed in China on March 27, 2020, the entire content of which is herein incorporated by reference.

### TECHNICAL FIELD

Embodiments of the present invention relate to the field of wireless communication technologies, and in particular, to a service receiving method and a service configuration method, a terminal, and a network-side device.

### BACKGROUND

In the existing Long Term Evolution (Long Term Evolution, LTE) technology, when a user equipment (User Equipment, UE, also referred to as a terminal) receives a broadcast multicast service in one cell, an operating frequency range of the user equipment does not change. Because a cell of 5G New Radio (New Radio, NR) (New Radio Access Technology (RAT)) may have a relatively large bandwidth, if the broadcast multicast service is configured in a specific frequency band range with a relatively large bandwidth, and the terminal may operate in a relatively small bandwidth, how to receive the broadcast multicast service or other services becomes an urgent technical problem to be resolved.

### SUMMARY

Embodiments of the present invention provide a service receiving method, a service configuration method, a terminal, and a network-side device, which are configured to resolve the problem of how to receive a broadcast multicast service or other services.

To resolve the technical problems above, the present invention is implemented as follows:

According to a first aspect, an embodiment of the present invention provides a service receiving method, applied to a terminal, including:
receiving configuration information about a frequency range in which at least one first service is located; and
in a case that a target first service in the at least one broadcast multicast service needs to be received, receiving the target first service in a current operating frequency range or by switching from the current operating frequency range to a frequency range in which the target first service is located.

According to a second aspect, an embodiment of the present invention provides a service configuration method, applied to a network-side device, including:
sending configuration information about a frequency range in which at least one first service is located to a terminal.

According to a third aspect, an embodiment of the present invention provides a terminal, including:
a first receiving module, configured to receive configuration information about a frequency range in which at least one first service is located; and
a second receiving module, configured to receive, in a case that a target first service in the at least one broadcast multicast service needs to be received, the target first service in a current operating frequency range or by switching from the current operating frequency range to a frequency range in which the target first service is located.

According to a fourth aspect, an embodiment of the present invention provides a network-side device, including:
a first sending module, configured to send configuration information about a frequency range in which at least one first service is located to a terminal.

According to a fifth aspect, an embodiment of the present invention provides a terminal, including a processor, a memory, and a program stored in the memory and executable on the processor, where the program, when executed by the processor, implements the steps of the service receiving method according to the first aspect.

According to a sixth aspect, an embodiment of the present invention provides a network-side device, including a processor, a memory, and a program stored on the memory and executable on the processor, where the program, when executed by the processor, implements the steps of the method for reporting a random access report according to the second aspect.

According to a seventh aspect, an embodiment of the present invention provides a computer-readable storage medium, storing a program, where the program, when executed by a processor, implements the steps of the method for reporting a random access report according to the first aspect; or the program, when executed by the processor, implements the steps of the service configuration method according to the second aspect.

In this embodiment of the present invention, the configuration information about the frequency range of the first service is configured to the terminal by the network-side device, so that the terminal and the network-side device have the same understanding about a sending manner of the first service, which can ensure that the first service is correctly received. In addition, the terminal can operate within a frequency range with a relatively small bandwidth when not receiving the first service, and when the terminal needs to receive the first service, the frequency range is switched to the frequency range of the first service, thereby helping to reduce power consumption of the terminal.

### BRIEF DESCRIPTION OF THE DRAWINGS

Various other advantages and benefits will become clear to a person of ordinary skill in the art by reading the following detailed description of exemplary implementations. The accompanying drawings are merely intended to show the preferred implementations and are do not intended to constitute a limitation on the present invention. Throughout the accompanying drawings, the same reference numerals are used to represent the same components. In the accompanying drawings,
FIG. 1 is a schematic diagram of an architecture of a wireless communications system according to an embodiment of the present invention;
FIG. 2A is a schematic flowchart of a service receiving method according to an embodiment of the present invention;
FIG. 2B is a schematic flowchart of a service receiving method according to another embodiment of the present invention;
FIG. 3 is a schematic flowchart of a service configuration method according to an embodiment of the present invention;
FIG. 4 is a schematic structural diagram of a terminal according to an embodiment of the present invention;
FIG. 5 is a schematic structural diagram of a network-side device according to an embodiment of the present invention;
FIG. 6 is a schematic structural diagram of a terminal according to another embodiment of the present invention;
FIG. 7 is a schematic structural diagram of a terminal according to still another embodiment of the present invention; and
FIG. 8 is a schematic structural diagram of a network-side device according to another embodiment of the present invention.

### DETAILED DESCRIPTION

In the specification, claims of this application, the terms "include", and any variants thereof are intended to cover a non-exclusive inclusion. For example, a process, method, system, product, or device that includes a series of steps or units is not necessarily limited to those steps or units that are clearly listed, but may include other steps or units not clearly listed or inherent to such a process, method, product, or device. In addition, "and/or" used in the specification and the claims means at least one of the connected objects. For example, A and/or B represents the following three cases: Only A exists, only B exists, and both A and B exist. "At least one of A and B" also represents the following three cases: Only A exists, only B exists, and both A and B exist.

In this embodiment of the present invention, the word "exemplary" or "for example" is used to represent giving an example, an illustration, or a description. Any embodiment or design scheme described as an "exemplary" or "for example" in the embodiments of the present invention should not be explained as being more preferred or having more advantages than another embodiment or design scheme. Exactly, use of the word "example" or "for example" or the like is intended to present a related concept in a specific manner.

The following describes the embodiments of the present invention with reference to the accompanying drawings. A service receiving method, a service configuration method, a terminal, and a network-side device provided in the embodiments of the present invention can be applied to a wireless communication system. The wireless communication systems can adopt a 5G system, an evolved Long Term Evolution (evolved Long Term Evolution, eLTE) system, or a subsequent evolved communications system.

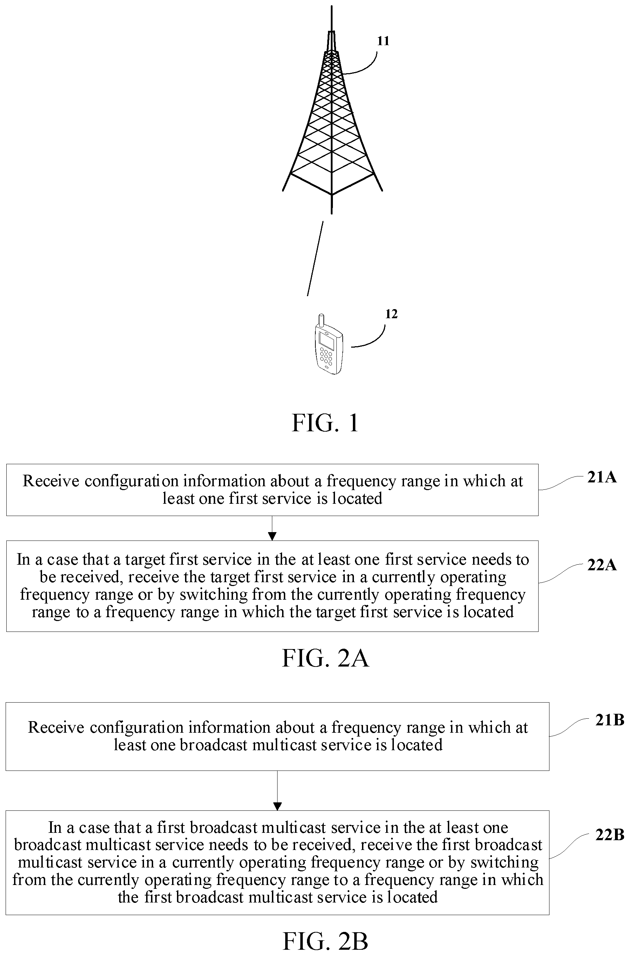

FIG. 1 is a schematic diagram of an architecture of a wireless communication system according to an embodiment of the present invention. As shown in FIG. 1, the wireless communication system may include: a network-side device 11 and a terminal 12. The terminal 12 can be connected to the network-side device 11. In actual application, connections between the foregoing devices may be wireless connection. For convenience of visually showing a connection relationship between the devices, solid lines are used for illustration in FIG. 1.

It should be noted that the communication system may include a plurality of terminals 12, and the network-side device 11 may be in communication with a plurality of terminals 12 (transmission signaling or transmission data).

The network-side device 11 provided in this embodiment of the present invention can be a base station. The base station can be a commonly used base station, an evolved node base station (evolved node base station, eNB), or devices such as a network-side device (such as a next generation node base station (next generation node base station, gNB) or a transmission and reception point (transmission and reception point, TRP)) or a cell in the 5G system, or a network-side device in a subsequent evolved communications system.

The terminal 12 provided in this embodiment of the present invention may be a mobile phone, a tablet computer, a notebook computer, an ultra-mobile personal computer (Ultra-Mobile Personal Computer, UMPC), a netbook, a personal digital assistant (Personal Digital Assistant, PDA), or the like.

The following briefly introduces a broadcast multicast service.

The broadcast multicast service is referred to as a multimedia broadcast and multicast service (Multimedia Broadcast and Multicast Service, MBMS) in LTE, and is referred to as a broadcast multicast service (Multicast Broadcast Service, MBS) in NR.

In the LTE system, the MBMS service can be sent in the following two manners:
Sending manner 1: The MBMS service is sent through a physical multicast channel (Physical Multicast Channel, PMCH) in an MBMS single frequency network (Multimedia Broadcast multicast service Single Frequency Network, MBSFN) subframe. Control information is sent through system information (for example, SIB 13) and a multicast control channel (Multicast Control Channel, MCCH), and data is sent through a multicast traffic channel (Multicast Traffic Channel, MTCH).
Sending manner 2: The MBMS service is sent through a physical downlink shared channel (Physical Downlink Shared Channel, PDSCH) channel scheduled by a physical downlink control channel (Physical Downlink Control Channel, PDCCH). Control information is sent through system information (for example, SIB20) and a single cell multicast control channel (Single Cell Multicast Control Channel, SC-MCCH), and data is sent through a single cell multicast traffic channel (Single Cell Multicast Traffic Channel, SC-MTCH). The SC-MCCH is sent through the PDSCH scheduled by a single cell radio network temporary identity (Radio Network Temporary Identity, RNTI) (Single Cell RNTI, SC-RNTI) PDCCH, and the SC-MTCH is sent through the PDSCH scheduled by a G-RNTI PDCCH.

Referring to FIG. 2A, an embodiment of the present invention provides a service receiving method, applied to a terminal, including:
Step 21A. Receive configuration information about a frequency range in which at least one first service is located; and
Step 22A. In a case that a target first service in the at least one first service needs to be received, receive the target first service in a current operating frequency range or by switching from the current operating frequency range to a frequency range in which the target first service is located.

The target first service that needs to be received by the terminal may also be referred to as a first service that the terminal is interested in receiving.

In this embodiment of the present invention, the configuration information about the frequency range of the first service is configured to the terminal by the network-side device, so that the terminal and the network-side device have the same understanding about a sending manner of the first service, which can ensure that the first service is correctly received. In addition, the terminal can operate within a frequency range with a relatively small bandwidth when not receiving the first service, and when the terminal needs to receive the first service, the frequency range is switched to the frequency range of the first service, thereby helping to reduce power consumption of the terminal.

The first service in this embodiment of the present invention may be a broadcast multicast service, or other types of first services. In the following embodiments, the broadcast multicast service is used as an example for description, and the implementation of other first services are the same. That is, the broadcast multicast service in the following embodiments can be replaced with the first service.

Referring to FIG. 2B, an embodiment of the present invention provides a service receiving method, applied to a terminal, including:
Step 21B. Receive configuration information about a frequency range in which at least one broadcast multicast service is located; and
For example, for a cell 1, a frequency range in which an MBS service 1 is located is BWP-MBS (an identifier of a BWP).
Step 22B. In a case that a first broadcast multicast service in the at least one broadcast multicast service needs to be received, receive the first broadcast multicast service in a current operating frequency range or by switching from the current operating frequency range to a frequency range in which the first broadcast multicast service is located.

The first broadcast multicast service that needs to be received by the terminal may also be referred to as the broadcast multicast service that the terminal is interested in receiving.

In this embodiment of the present invention, the configuration information about the frequency range of the broadcast multicast service is configured to the terminal by the network-side device, so that the terminal and the network-side device have the same understanding about a sending manner of the broadcast multicast service, which can ensure that the broadcast multicast service is correctly received. In addition, the terminal can operate within a frequency range with a relatively small bandwidth when not receiving the broadcast multicast service, and when the terminal needs to receive the broadcast multicast service, the frequency range is switched to the frequency range of the broadcast multicast service, thereby helping to reduce power consumption of the terminal.

In this embodiment of the present invention, Optionally, the frequency range in which the broadcast multicast service is located includes at least one of the following:
a frequency range in which service data of the broadcast multicast service is located; and
a frequency range in which control information about the broadcast multicast service is located.

In this embodiment of the present invention, Optionally, the configuration information about the frequency range includes at least one of the following:
a bandwidth part (Bandwidth Part, BWP) identifier (for example, BWP-1);
a frequency (for example, ARFCN-1, where ARFCN is an absolute radio frequency channel number);
a band width (for example, 20 MHz);
a frequency start position (for example, starting ARFCN-start);
a frequency end position (for example, ending ARFCN-end);
a physical resource block identifier (for example, PRB-1, where the PRB is a physical resource block); and
a physical resource block quantity identifier (for example, 10 PRBs).

The BWP is briefly introduced below: For a specific cell, a plurality of BWPs can be configured on a network side, corresponding to different operating frequency ranges. The network side may indicate the activated BWP through downlink control information (Downlink Control Information, DCI) signaling. For a specific cell, the terminal can only have one activated BWP at the same moment.

In this embodiment of the present invention, Optionally, the receiving the first broadcast multicast service in a current operating frequency range includes:
receiving the first broadcast multicast service in the current operating frequency range in a case that the current operating frequency range includes the frequency range in which the first broadcast multicast service is located.

The current operating frequency range including the frequency range in which the first broadcast multicast service is located refers to that the current operating frequency range is greater than or equal to the frequency range in which the first broadcast multicast service is located.

In this embodiment of the present invention, Optionally, the receiving the first broadcast multicast service in a current operating frequency range includes:
in a case that the frequency range in which the first broadcast multicast service is located is located within the current operating frequency range and is less than the current operating frequency range, receiving the first broadcast multicast service by switching from the current operating frequency range to a frequency range in which the first broadcast multicast service is located.

That is, the operating frequency range of the terminal is switched to a smaller frequency range to save the power consumption of the terminal.

In this embodiment of the present invention, Optionally, the receiving the first broadcast multicast service by switching from the current operating frequency range to the frequency range in which the first broadcast multicast service is located includes:
in a case that the current operating frequency range does not include or does not completely include the frequency range in which the first broadcast multicast service is located, receiving the first broadcast multicast service by switching from the current operating frequency range to the frequency range in which the first broadcast multicast service is located.

For example, the frequency range in which the MBS service 1 of the cell 1 is located is BWP-MBS. The current operating frequency range of the terminal is BWP-1, and the BWP-1 does not include the BWP-MBS or does not completely include the BWP-MBS, then the terminal switches the operating frequency range to the BWP-MBS.

A behavior of the terminal after the first broadcast multicast service is received is described below.
(1) In some embodiments of the present invention, optionally, the receiving the first broadcast multicast service includes:
   starting or restarting a first timer in a case that the terminal detects related information about a second service, where the second service includes the broadcast multicast service, and the related information includes at least one of the following: scheduling information about service data, scheduling information about control information, and switching indication information about the control information; and
   switching the current operating frequency range to a first frequency range in a case that the first timer expires.

The first timer is configured to start counting a time after the terminal detects the related information about the second service and does not detect new related information. If a device runs on the first timer, new related information is detected, and the first timer is restarted. If the first timer expires, the current operating frequency range is switched to the first frequency range.

In some embodiments, the second service may only be a broadcast multicast service, that is, the first timer is only started or restarted when related information about the broadcast multicast service is detected.

In some embodiments, the second service may include the broadcast multicast service and other services (that is, ordinary services) other than the broadcast multicast service. That is, the first timer is started or restarted when detecting the related information about the broadcast multicast service or other services.

That is, when receiving scheduling information sent or received by an ordinary service (or when sending (or receiving) data through a configured uplink (or downlink) resource), the terminal starts or restarts the first timer. For example, when receiving uplink or downlink sending resource information scheduled by C-RNTI or CS-RNTI, the terminal starts the first timer. In another example, when sending (or receiving) data through Configured Grant-1 (or SPS-1), the terminal starts the first timer.

Optionally, the first frequency range is a frequency range with a relatively small bandwidth, so as to help to reduce the power consumption of the terminal. For example, the first frequency range is a frequency range corresponding to a default BWP or an initial BWP.

Certainly, if before receiving the first broadcast multicast service, the terminal switches from a frequency range to the frequency range of the first broadcast multicast service, in this case, it is not excluded that the first frequency range is the operating frequency range before switching of the terminal.

For example, the frequency range in which the MBS service 1 of the cell 1 is located is the BWP-MBS. The current operating frequency range of the terminal is the BWP-1, the BWP-1 include the BWP-MBS, and the MBS service 1 is received in the BWP-1. If scheduling information PDCCH of the PDSCH channel that sends the MBS service is marked with a specific identifier (for example, g-RNTI), when detecting that the g-RNTI has scheduling data to be transmitted, the terminal starts or restarts the first timer t-MBS, and the terminal switches the operating BWP-1 to the default BWP when the first timer t-MBS expires.

(2) In some embodiments of the present invention, optionally, the receiving the first broadcast multicast service includes: switching the current operating frequency range to a first frequency range in a case that the terminal completes receiving the first broadcast multicast service within a first time period.

Optionally, the first frequency range is a frequency range with a relatively small bandwidth, so as to help to reduce the power consumption of the terminal. For example, the first frequency range is a frequency range corresponding to a default BWP or an initial BWP.

Certainly, if before receiving the first broadcast multicast service, the terminal switches from a frequency range to the frequency range of the first broadcast multicast service, in this case, it is not excluded that the first frequency range is the operating frequency range before switching of the terminal.

For example, the frequency range in which the MBS service 1 of the cell 1 is located is the BWP-MBS. The current operating frequency range of the terminal is the BWP-1, the BWP-1 include the BWP-MBS, and the MBS service 1 is received in the BWP-1. A sending period of the MBS service 1 is T, and a sending time range of each sending period is [t1, t2]. After receiving the MBS service 1 in the time range [t1, t2], that is, after a time t2, the terminal switches the operating frequency range to the default BWP.

(3) In some embodiments of the present invention, optionally, the receiving the first broadcast multicast service includes: switching the current operating frequency range to a first frequency range in a case that the terminal completes receiving the first broadcast multicast service within a first time period, and sends the reception success indication information.

Optionally, the first frequency range is a frequency range with a relatively small bandwidth, so as to help to reduce the power consumption of the terminal. For example, the first frequency range is a frequency range corresponding to a default BWP or an initial BWP.

Certainly, if before receiving the first broadcast multicast service, the terminal switches from a frequency range to the frequency range of the first broadcast multicast service, in this case, it is not excluded that the first frequency range is the operating frequency range before switching of the terminal.

For example, the frequency range in which the MBS service 1 of the cell 1 is located is the BWP-MBS. The current operating frequency range of the terminal is the BWP-1, the BWP-1 include the BWP-MBS, and the MBS service 1 is received in the BWP-1. A sending period of the MBS service 1 is T, and a sending time range of each sending period is [t1, t2]. Then, after the terminal receives the MBS service 1 in the time range [t1, t2], if the terminal sends the reception failure indication information (for example, HARQ-NACK) to the network side, the terminal needs to continue to operate in the BWP-1. The terminal does not switch the operating BWP to the default BWP until the terminal sends the reception success indication information (for example, HARQ-ACK) to the network side.

(4) In some embodiments of the present invention, optionally, the receiving the first broadcast multicast service includes: switching the current operating frequency range to a first frequency range in a case that the terminal completes receiving the first broadcast multicast service within a first time period and sends reception indication information, where the reception feedback indication information includes: any one of reception success indication information and reception failure indication information.

Optionally, the first frequency range is a frequency range with a relatively small bandwidth, so as to help to reduce the power consumption of the terminal. For example, the first frequency range is a frequency range corresponding to a default BWP or an initial BWP.

Certainly, if before receiving the first broadcast multicast service, the terminal switches from a frequency range to the frequency range of the first broadcast multicast service, in this case, it is not excluded that the first frequency range is the operating frequency range before switching of the terminal.

For example, the frequency range in which the MBS service 1 of the cell 1 is located is the BWP-MBS. The current operating frequency range of the terminal is the BWP-1, the BWP-1 include the BWP-MBS, and the MBS service 1 is received in the BWP-1. A sending period of the MBS service is T, and a sending time range of each sending period is [t1, t2]. Then, after the terminal receives the MBS service 1 in the time range [t1, t2], if the terminal sends the reception feedback indication information (for example, HARQ-NACK or HARQ-NACK) to the network side, the terminal switches the operating BWP to the default BWP.

In the foregoing embodiments, the terminal automatically determines a relationship between the current operating frequency range and the frequency range of the to-be-received first broadcast multicast service, and then determines whether to switch the operating frequency range. In some other embodiments of the present invention, optionally, the receiving the first broadcast multicast service includes: reporting the frequency range in which the first broadcast multicast service is located to the network-side device. The network-side device determines whether the operating frequency range of the terminal needs to be switched according to a relationship between the current operating frequency range of the terminal and the frequency range of the to-be-received first broadcast multicast service, and sends a frequency range switching indication to the terminal when the switching is required.

For example, the frequency range in which the MBS service 1 of the cell 1 is located is the BWP-MBS. The terminal indicates to the network side that the frequency range in which the MBS service 1 is located that the terminal is interested in receiving is the BWP-MBS of the cell 1. Then, the network side can switch the operating frequency range of the terminal to the frequency range in which the MBS service is located based on implementation (for example, sending RRC reconfiguration information, or sending a BWP switching indication of DCI).

That is, in some embodiments of the present invention, optionally, after the reporting the frequency range in which the first broadcast multicast service is located to the network-side device, the method further includes: receiving a frequency range switching indication sent by the network-side device, where the frequency range switching indication is used for instructing the terminal to switch the current operating frequency range to the frequency range in which the first broadcast multicast service is located.

Optionally, the frequency range switching indication is sent through at least one piece of the following information: RRC reconfiguration information and DCI information.

In some other optional embodiments of the present invention, optionally, the receiving the first broadcast multicast service includes:
receiving the first broadcast multicast service in the frequency range in which the first broadcast multicast service is located according to configuration information about an operating frequency range, where the configuration information about the operating frequency range includes an operating duration of the terminal in at least two frequency ranges, and at least one of the at least two frequency ranges includes the frequency range in which the first broadcast multicast service is located.

Optionally, the configuration information about the operating frequency range further includes: a switching period of the operating frequency range.

Optionally, the at least two frequency ranges include a first frequency range.

Optionally, the first frequency range is a frequency range with a relatively small bandwidth, so as to help to reduce the power consumption of the terminal. For example, the first frequency range is a frequency range corresponding to a default BWP or an initial BWP.

For example, the network side configures that a duration of the operating time of the terminal in the BWP-1 is T1, a duration of the operating time in the BWP-2 is T2, and a switching period of the operating frequency range is T. Then the terminal operates in the BWP-1 (the BWP-1 includes the frequency range in which the MBS service is located that the terminal is interested in) at time [t1, t2]=T1, the terminal operates in the BWP-2 (such as the default BWP) at time [t3, t4]=T2 and switches the operating frequency range to BWP-1 at time [t1', t2']=T 1, and time [t1, t1']=T.

In this embodiment of the present invention, Optionally, after the switching the current operating frequency range to the first frequency range, the method includes: triggering a random access process in the first frequency range, so as to notify the network-side device that the operating frequency range of the terminal is switched.

In this embodiment of the present invention, Optionally, the service receiving method further includes: reporting information about frequency range switching to a network-side device.

Optionally, the information about frequency range switching includes at least one of the following:
indication information about switching the frequency range (for example, indicating that the terminal switches the operating frequency range by using 1 bit);
a reason for switching the frequency range (for example, the cause of switching the frequency range is as follows: "the MBS service is received"; "the MBS service starts to be received"; "being interested in receiving the MBS service"; and "being no longer interested in receiving the MBS service");
indication information about a frequency range before switching (for example, BWP-1);
indication information about a frequency range after switching (for example, BWP-MBS);
a measurement result of the frequency range before switching (for example, RSRP or RSRQ or SINR for BWP-1); and
a measurement result of the frequency range after switching (for example, RSRP or RSRQ or SINR for BWP-MBS).

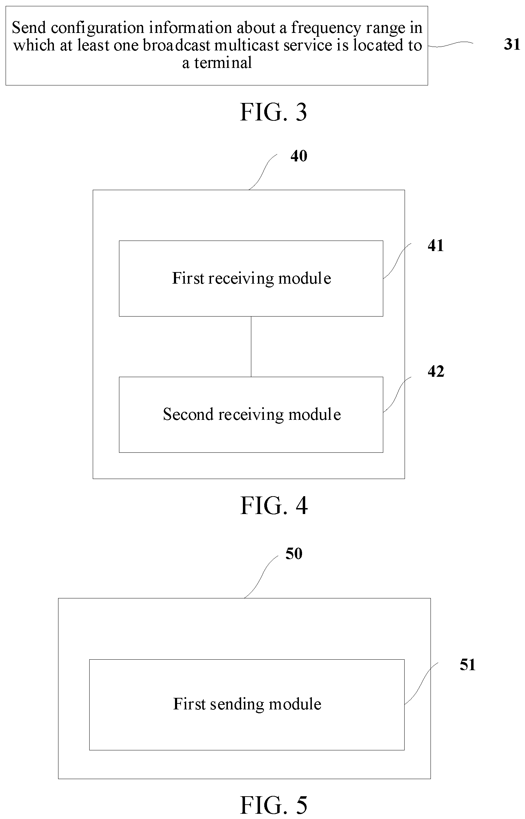

Referring to FIG. 3, the present invention further provides a service configuration method, applied to a network-side device, the method including:
Step 31. Send configuration information about a frequency range in which at least one broadcast multicast service is located to a terminal.

In this embodiment of the present invention, the configuration information about the frequency range of the broadcast multicast service is configured to the terminal by the network-side device, so that the terminal and the network-side device have the same understanding about a sending manner of the broadcast multicast service, which can ensure that the broadcast multicast service is correctly received. In addition, the terminal can operate within a frequency range with a relatively small bandwidth when not receiving the broadcast multicast service, and when the terminal needs to receive the broadcast multicast service, the frequency range is switched to the frequency range of the broadcast multicast service, thereby helping to reduce power consumption of the terminal.

Optionally, the frequency range in which the broadcast multicast service is located includes at least one of the following:
a frequency range in which service data of the broadcast multicast service is located; and
a frequency range in which control information about the broadcast multicast service is located.

Optionally, the configuration information about the frequency range includes at least one of the following:
a BWP identifier;
a frequency;
a bandwidth;
a frequency start position;
a frequency end position;
a physical resource block identifier; and
a physical resource block quantity identifier.

Optionally, the service configuration method further includes:
receiving a frequency range in which a first broadcast multicast service that needs to be received by the terminal is located and that is sent by the terminal; and
in a case that a current operating frequency range of the terminal does not include or does not completely include the frequency range in which the first broadcast multicast service is located, sending a frequency range switching indication to the terminal, where the frequency range switching indication is used for instructing the terminal to switch the current operating frequency range to the frequency range in which the first broadcast multicast service is located.

Optionally, the frequency range switching indication is sent through at least one piece of the following information: RRC reconfiguration information and DCI information.

Optionally, the service configuration method further includes:
sending configuration information about an operating frequency range to the terminal, where the configuration information about the operating frequency range includes an operating duration of the terminal in at least two frequency ranges, and at least one of the at least two frequency ranges includes a frequency range in which the first broadcast multicast service is located.

Optionally, the configuration information about the operating frequency range further includes: a switching period of the operating frequency range.

Optionally, the service configuration method further includes:
receiving information about switching a frequency range reported by the terminal.

Optionally, the information about frequency range switching includes at least one of the following:
indication information about frequency range switching;
a reason for frequency range switching;
indication information about a frequency range before switching;
indication information about a frequency range after switching;
a measurement result of the frequency range before switching; and
a measurement result of the frequency range after switching.

Referring to FIG. 4, an embodiment of the present invention further provides a terminal 40, including:
a first receiving module 41, configured to receive configuration information about a frequency range in which at least one broadcast multicast service is located; and
a second receiving module 42, configured to receive, in a case that a first broadcast multicast service in the at least one broadcast multicast service needs to be received, the first broadcast multicast service in a current operating frequency range or by switching from the current operating frequency range to a frequency range in which the first broadcast multicast service is located.

In this embodiment of the present invention, the configuration information about the frequency range of the broadcast multicast service is configured to the terminal by the network-side device, so that the terminal and the network-side device have the same understanding about a sending manner of the broadcast multicast service, which can ensure that the broadcast multicast service is correctly received. In addition, the terminal can operate within a frequency range with a relatively small bandwidth when not receiving the broadcast multicast service, and when the terminal needs to receive the broadcast multicast service, the frequency range is switched to the frequency range of the broadcast multicast service, thereby helping to reduce power consumption of the terminal.

Optionally, the frequency range in which the broadcast multicast service is located includes at least one of the following:
a frequency range in which service data of the broadcast multicast service is located; and
a frequency range in which control information about the broadcast multicast service is located.

Optionally, the configuration information about the frequency range includes at least one of the following:
a bandwidth part BWP identifier;
a frequency;
a bandwidth;
a frequency start position;
a frequency end position;
a physical resource block identifier; and
a physical resource block quantity identifier.

Optionally, a second receiving module 42 is configured to receive the first broadcast multicast service in the current operating frequency range in a case that the current operating frequency range includes the frequency range in which the first broadcast multicast service is located.

Optionally, a second receiving module 42 is configured to receive, in a case that the current operating frequency range does not include or does not completely include the frequency range in which the first broadcast multicast service is located, the first broadcast multicast service by switching from the current operating frequency range to the frequency range in which the first broadcast multicast service is located.

Optionally, a second receiving module 42 is configured to start or restart a first timer in a case that the terminal detects related information about a second service, where the second service includes the broadcast multicast service, and the related information includes at least one of the following: scheduling information about service data, scheduling information about control information, and switching indication information about the control information; and switching the current operating frequency range to a first frequency range in a case that the first timer expires.

Optionally, the second service further includes other services other than the broadcast multicast service.

Optionally, a second receiving module 42 is configured to switch the current operating frequency range to a first frequency range in a case that the terminal completes receiving the first broadcast multicast service within a first time period.

Optionally, a second receiving module 42 is configured to switch the current operating frequency range to a first frequency range in a case that the terminal completes receiving the first broadcast multicast service within a first time period, and sends the reception success indication information.

Optionally, a second receiving module 42 is configured to switch the current operating frequency range to a first frequency range in a case that the terminal completes receiving the first broadcast multicast service within a first time period and sends reception feedback indication information, where the reception feedback indication information includes: any one of reception success indication information and reception failure indication information.

Optionally, the terminal 40 further includes:
a first reporting module, configured to report the frequency range in which the first broadcast multicast service is located to a network-side device.

Optionally, the terminal 40 further includes:
a third receiving module, configured to receive a frequency range switching indication sent by the network-side device, where the frequency range switching indication is used for instructing the terminal to switch the current operating frequency range to the frequency range in which the first broadcast multicast service is located.

Optionally, the frequency range switching indication is sent through at least one piece of the following information: RRC reconfiguration information and DCI information.

Optionally, the second receiving module 42 is configured to receive the first broadcast multicast service in the frequency range in which the first broadcast multicast service is located according to configuration information about an operating frequency range, where the configuration information about the operating frequency range includes an operating duration of the terminal in at least two frequency ranges, and at least one of the at least two frequency ranges includes the frequency range in which the first broadcast multicast service is located.

Optionally, the configuration information about the operating frequency range further includes: a switching period of the operating frequency range.

Optionally, the at least two frequency ranges include a first frequency range.

Optionally, the first frequency range is a frequency range corresponding to a default BWP or an initial BWP.

Optionally, the terminal 40 further includes:
an access module, configured to trigger a random access process in the first frequency range.

Optionally, the terminal 40 further includes:
a second reporting module, configured to report information about frequency range switching to a network-side device.

Optionally, the information about frequency range switching includes at least one of the following:
indication information about frequency range switching;
a reason for frequency range switching;
indication information about a frequency range before switching;
indication information about a frequency range after switching;
a measurement result of the frequency range before switching; and
a measurement result of the frequency range after switching.

The terminal provided in this embodiment of the present invention can implement the processes implemented by the terminal in the method embodiment of FIG. 2A and FIG. 2B. To avoid repetition, details are not described herein again.

Referring to FIG. 5, this embodiment of the present invention further provides a network-side device, including:
a first sending module 51, configured to send configuration information about a frequency range in which at least one broadcast multicast service is located to a terminal.

In this embodiment of the present invention, the configuration information about the frequency range of the broadcast multicast service is configured to the terminal by the network-side device, so that the terminal and the network-side device have the same understanding about a sending manner of the broadcast multicast service, which can ensure that the broadcast multicast service is correctly received. In addition, the terminal can operate within a frequency range with a relatively small bandwidth when not receiving the broadcast multicast service, and when the terminal needs to receive the broadcast multicast service, the frequency range is switched to the frequency range of the broadcast multicast service, thereby helping to reduce power consumption of the terminal.

Optionally, the frequency range in which the broadcast multicast service is located includes at least one of the following:
a frequency range in which service data of the broadcast multicast service is located; and
a frequency range in which control information about the broadcast multicast service is located.

Optionally, the configuration information about the frequency range includes at least one of the following:
a BWP identifier;
a frequency;
a bandwidth;
a frequency start position;
a frequency end position;
a physical resource block identifier; and
a physical resource block quantity identifier.

Optionally, the network-side device further includes:
a first receiving module, configured to receive a frequency range in which a first broadcast multicast service that needs to be received by the terminal is located and that is sent by the terminal; and
a second sending module, configured to send, in a case that a current operating frequency range of the terminal does not include or does not completely include the frequency range in which the first broadcast multicast service is located, a frequency range switching indication to the terminal, where the frequency range switching indication is used for instructing the terminal to switch the current operating frequency range to the frequency range in which the first broadcast multicast service is located.

Optionally, the frequency range switching indication is sent through at least one piece of the following information: RRC reconfiguration information and DCI information.

Optionally, the network-side device further includes:
a third sending module, configured to send configuration information about an operating frequency range to the terminal, where the configuration information about the operating frequency range includes an operating duration of the terminal in at least two frequency ranges, and at least one of the at least two frequency ranges includes a frequency range in which the first broadcast multicast service is located.

Optionally, the configuration information about the operating frequency range further includes: a switching period of the operating frequency range.

Optionally, the network-side device further includes:
a second receiving module, configured to receive information about switching a frequency range reported by the terminal.

Optionally, the information about frequency range switching includes at least one of the following:
indication information about frequency range switching;
a reason for frequency range switching;
indication information about a frequency range before switching;
indication information about a frequency range after switching;
a measurement result of the frequency range before switching; and
a measurement result of the frequency range after switching.

The terminal provided in this embodiment of the present invention can implement the processes implemented by the network-side device in the method embodiment of FIG. 3. To avoid repetition, details are not described herein again.

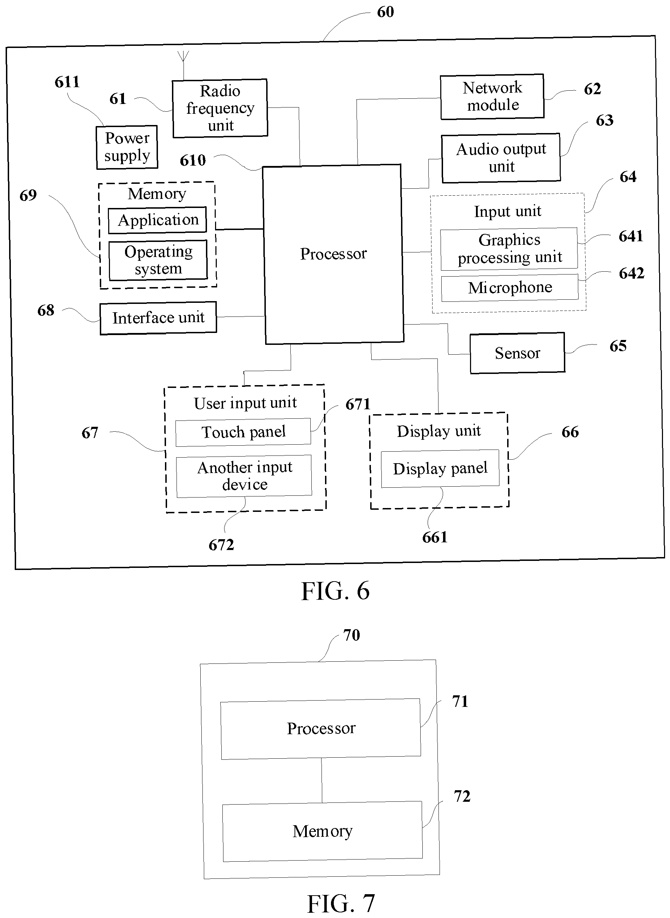

FIG. 6 is a schematic diagram of a hardware structure of a terminal for implementing various embodiments of the present invention. The terminal 60 includes but is not limited to: components such as a radio frequency unit 61, a network module 62, an audio output unit 63, an input unit 64, a sensor 65, a display unit 66, a user input unit 67, an interface unit 68, a memory 69, a processor 610, and a power supply 611. A person skilled in the art may understand that a terminal structure shown in FIG. 6 constitutes no limitation on the terminal, and the terminal may include more or fewer components than those shown in the figure, or some components may be combined, or a different component deployment may be used. In this embodiment of the present invention, the terminal includes, but is not limited to, a mobile phone, a tablet computer, a notebook computer, a palmtop computer, an in-vehicle terminal, a wearable device, a pedometer, and the like.

The radio frequency unit 61 is configured to receive configuration information about a frequency range in which at least one broadcast multicast service is located; and
the processor 610 is configured to receive, in a case that a first broadcast multicast service in the at least one broadcast multicast service needs to be received, the first broadcast multicast service in a current operating frequency range or by switching from the current operating frequency range to a frequency range in which the first broadcast multicast service is located.

In this embodiment of the present invention, the configuration information about the frequency range of the broadcast multicast service is configured to the terminal by the network-side device, so that the terminal and the network-side device have the same understanding about a sending manner of the broadcast multicast service, which can ensure that the broadcast multicast service is correctly received. In addition, the terminal can operate within a frequency range with a relatively small bandwidth when not receiving the broadcast multicast service, and when the terminal needs to receive the broadcast multicast service, the frequency range is switched to the frequency range of the broadcast multicast service, thereby helping to reduce power consumption of the terminal.

The terminal provided in this embodiment of the present invention can implement the processes implemented by the terminal in the method embodiment of FIG. 2A and FIG. 2B. To avoid repetition, details are not described herein again.

It should be understood that, in this embodiment of the present invention, the radio frequency unit 61 may be configured to receive and transmit a signal during an information receiving and transmitting process or a call process. Specifically, the radio frequency unit receives downlink data from a base station, then delivers the downlink information to the processor 610 for processing; and in addition, transmits related uplink data to the base station. Generally, the radio frequency unit 61 includes, but is not limited to, an antenna, at least one amplifier, a transceiver, a coupler, a low noise amplifier, a duplexer, and the like. In addition, the radio frequency unit 61 may further communicate with the network and another device through wireless communication system.

The terminal provides the user with wireless broadband Internet access through a network module 62, such as helping the user to send and receive emails, browse web pages, and access streaming media.

An audio output unit 63 may convert audio data received by the radio frequency unit 61 or the network module 62 or stored in a memory 69 into an audio signal and output as sound. In addition, the audio output unit 63 may further provide an audio output that is related to a particular function executed by the terminal 60 (for example, a call signal receiving sound or a message receiving sound). The audio output unit 63 includes a loudspeaker, a buzzer, a receiver, and the like.

An input unit 64 is configured to receive an audio signal or a video signal. The input unit 64 may include a graphics processing unit (Graphics Processing Unit, GPU) 641 and a microphone 642. The GPU 641 processes image data of a static picture or a video acquired by an image capturing device (for example, a camera) in a video capturing mode or an image capturing mode. An image frame that has been processed may be displayed on a display unit 66. The image frame processed by the GPU 641 may be stored on the memory 69 (or another storage medium) or sent through the radio frequency unit 61 or the network module 62. The microphone 642 can receive sound and can process such sound into audio data. The processed audio data may be transferred, in a phone talk mode, to a format that may be transmitted to a mobile communication base station via the radio frequency unit 61 to output.

The terminal 60 further includes at least one sensor 65, such as an optical sensor, a motion sensor, and other sensors. Specifically, the optical sensor includes an ambient light sensor and a proximity sensor. The ambient light sensor may adjust luminance of the display panel 661 according to brightness of the ambient light. The proximity sensor may switch off the display panel 661 and/or backlight when the terminal 60 is moved to the ear. As one type of motion sensor, an acceleration sensor may detect magnitude of accelerations in various directions (which generally are triaxial), may detect magnitude and a direction of the gravity when static, and may be configured to identify a terminal attitude (such as switchover between horizontal and vertical screens, a related game, and attitude calibration of a magnetometer), a related function of vibration identification (such as a pedometer and a knock); and the sensor 65 may further include a fingerprint sensor, a pressure sensor, an iris sensor, a molecular sensor, a gyroscope, a barometer, a hygrometer, a thermometer, an infrared sensor, etc., which are not be repeated herein.

A display unit 66 is configured to display information input by the user or information provided for the user. The display unit 66 may include a display panel 661. The display panel 661 may be configured by using a liquid crystal display (Liquid Crystal Display, LCD), an organic light-emitting diode (Organic Light-Emitting Diode, OLED), or the like.

A user input unit 67 may be configured to: receive input digit or character information, and generate a keyboard signal input related to a user setting and function control of the terminal. Specifically, the user input unit 67 includes a touch panel 671 and another input device 672. The touch panel 671, also referred to as a touchscreen, may collect a touch operation of a user on or near the touch panel (such as an operation of a user on or near the touch panel 671 by using any suitable object or attachment, such as a finger or a stylus). The touch panel 671 may include two parts: a touch detection apparatus and a touch controller. The touch detection apparatus detects a touch orientation of the user, detects a signal generated by the touch operation, and transfers the signal to the touch controller. The touch controller receives the touch information from the touch detection apparatus, converts the touch information into touch point coordinates, and transmits the touch point coordinates to the processor 610. Moreover, the touch controller may receive and execute a command transmitted from the processor 610. In addition, the touch panel 671 may be implemented by using various types, such as a resistive type, a capacitance type, an infrared type, and a surface acoustic wave type. In addition to the touch panel 671, the user input unit 67 may further include the another input device 672. Specifically, the another input device 672 may include, but is not limited to, a physical keyboard, a functional key (such as a volume control key or a switch key), a track ball, a mouse, and a joystick, which are not repeated herein.

Further, the touch panel 671 may cover the display panel 661. After detecting a touch operation on or near the touch panel 671, the touch panel transfers the touch operation to the processor 610, to determine a type of a touch event. Then, the processor 610 provides a corresponding visual output on the display panel 661 according to the type of the touch event. In FIG. 6, the touch panel 671 and the display panel 661 implement, as two independent parts, input and output functions of the terminal device. However, in some embodiments, the touch panel 671 and the display panel 661 may be integrated to implement the input and output functions of the terminal device, which is not specifically limited herein.

An interface unit 68 is an interface for connecting an external device to the terminal 60. For example, the external apparatus may include a wired or wireless headset port, an external power supply (or a battery charger) port, a wired or wireless data port, a storage card port, a port used to connect an apparatus having an identification module, an audio input/output (I/O) port, a video I/O port, an earphone port, and the like. The interface unit 68 may be configured to receive an input (for example, data information or power) from an external apparatus, and transmit the received input to one or more elements in the terminal 60, or may be configured to transmit data between the terminal 60 and the external apparatus.

The memory 69 may be configured to store a software program and various data. The memory 69 may mainly include a program storage area and a data storage area. The program storage area may store an operating system, an application program required by at least one function (such as a sound playback function and an image display function), and the like. The data storage area may store data (such as audio data and an address book) created according to the use of the mobile phone, and the like. In addition, the memory 69 may include a high speed random access memory, and may also include a non-volatile memory, such as at least one magnetic disk storage device, a flash memory, or another volatile solid-state storage device.

The processor 610 is a control center of the entire terminal, and connects to various parts of the terminal by using various interfaces and lines. By running or executing the software program and/or module stored in the memory 69, and invoking data stored in the memory 69, the processor performs various functions and data processing of the terminal, thereby performing overall monitoring on the terminal. Optionally, the processor 610 may include one or more processing units. Preferably, the processor 610 may integrate an application processor and a modem. The application processor mainly processes an operating system, a user interface, an application, and the like. The modem mainly processes wireless communication. It may be understood that the foregoing modem may either not be integrated into the processor 610.

The terminal 60 may further include the power supply 611 (such as a battery) for supplying power to the components. Preferably, the power supply 611 may be logically connected to the processor 610 by a power management system, thereby implementing functions such as charging, discharging, and power consumption management by using the power management system.

In addition, the terminal 60 includes some functional module that are not shown, which are not described herein in detail.

Referring to FIG. 7, the embodiments of the present invention further provide a terminal 70, including a processor 71, a memory 72, and a computer program on the memory 72 and executed by the processor 71, where when executed by the processor 71, the computer program implements the processes of the embodiment of the service receiving method, and the same technical effects can be achieved. To avoid repetition, details are not described herein again.

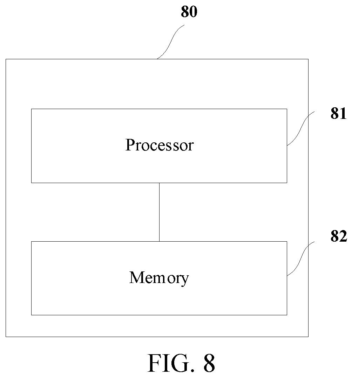

Referring to FIG. 8, the embodiments of the present invention further provide a network-side device 80, including a processor 81, a memory 82, and a computer program stored on the memory 82 and executed by the processor 81, where the computer program, when executed by the processor 81, implements the processes of the embodiment of the service configuration method, and can achieve the same technical effects. To avoid repetition, details are not described herein again.

The embodiments of the present invention further provide a computer-readable storage medium, storing a computer program, where when executed by a processor, the computer program implements the processes of the embodiment of the service receiving method, and the same technical effects can be achieved. To avoid repetition, details are not described herein again.

The embodiments of the present invention further provide a computer-readable storage medium, storing a computer program, where when executed by a processor, the computer program implements the processes of the embodiment of the service configuration method, and can achieve the same technical effects. To avoid repetition, details are not described herein again.

The computer-readable storage medium is, for example, a Read-Only Memory (Read-Only Memory, ROM), a Random Access Memory (Random Access Memory, RAM), a magnetic disk, an optical disc or the like.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present invention.

The embodiments of the present invention are described above with reference to the accompanying drawings, but the present invention is not limited to the foregoing specific implementations, which are merely illustrative rather than limited. Under the inspiration of the present invention, a person of ordinary skill in the art can make many forms without departing from the scope of the present invention and the protection of the claims, all of which fall within the protection of the present invention.

## Claims

1. A service receiving method, applied to a terminal, comprising:
receiving configuration information about a frequency range in which at least one first service is located; and
in a case that a target first service in the at least one first service needs to be received, receiving the target first service in a current operating frequency range or by switching from the current operating frequency range to a frequency range in which the target first service is located.

2. The method according to claim 1, wherein the frequency range in which the first service is located comprises at least one of the following:
a frequency range in which service data of the first service is located; and
a frequency range in which control information about the first service is located.

3. The method according to claim 1 or 2, wherein the configuration information about the frequency range comprises at least one of the following:
a bandwidth part BWP identifier;
a frequency;
a bandwidth;
a frequency start position;
a frequency end position;
a physical resource block identifier; and
a physical resource block quantity identifier.

4. The method according to claim 1, wherein the receiving the target first service in a current operating frequency range comprises:
receiving the target first service in the current operating frequency range in a case that the current operating frequency range comprises the frequency range in which the target first service is located.

5. The method according to claim 1, wherein the receiving the target first service by switching from the current operating frequency range to a frequency range in which the target first service is located comprises:
in a case that the current operating frequency range does not comprise or does not completely comprise the frequency range in which the target first service is located, receiving the target first service by switching from the current operating frequency range to the frequency range in which the target first service is located.

6. The method according to claim 1, wherein the receiving the target first service comprises:
starting or restarting a first timer in a case that the terminal detects related information about a second service, wherein the second service comprises the first service, and the related information comprises at least one of the following: scheduling information about service data, scheduling information about control information, and switching indication information about the control information; and
switching the current operating frequency range to a first frequency range in a case that the first timer expires.

7. The method according to claim 6, wherein the second service further comprises other services other than the first service.

8. The method according to claim 1, wherein the receiving the target first service further comprises:
switching the current operating frequency range to a first frequency range in a case that the terminal completes receiving the target first service within a first time period.

9. The method according to claim 1, wherein the receiving the target first service comprises:
switching the current operating frequency range to a first frequency range in a case that the terminal completes receiving the target first service within a first time period and sends reception success indication information.

10. The method according to claim 1, wherein the receiving the target first service comprises:
switching the current operating frequency range to a first frequency range in a case that the terminal completes receiving the target first service within a first time period and sends received feedback indication information, wherein the reception feedback indication information comprises: any one of reception success indication information and reception failure indication information.

11. The method according to claim 1, further comprising:
reporting the frequency range in which the target first service is located to a network-side device.

12. The method according to claim 11, wherein the reporting the frequency range in which the target first service is located to a network-side device further comprises:
receiving a frequency range switching indication sent by the network-side device, wherein the frequency range switching indication is used for instructing the terminal to switch the current operating frequency range to the frequency range in which the target first service is located.

13. The method according to claim 12, wherein the frequency range switching indication is sent through at least one piece of the following information: radio resource control RRC reconfiguration information and downlink control information DCI information.

14. The method according to claim 1, wherein the receiving the target first service comprises:
receiving the target first service in the frequency range in which the target first service is located according to configuration information about an operating frequency range, wherein the configuration information about the operating frequency range comprises an operating duration of the terminal in at least two frequency ranges, and at least one of the at least two frequency ranges comprises the frequency range in which the target first service is located.

15. The method according to claim 14, wherein the configuration information about the operating frequency range further comprises: a switching period of the operating frequency range.

16. The method according to claim 14, wherein the at least two frequency ranges comprise a first frequency range.

17. The method according to any one of claims 6 to 10 and 16, wherein the first frequency range is a frequency range corresponding to a default BWP or an initial BWP.

18. The method according to any one of claims 6 to 10 and 16, wherein after the switching the current operating frequency range to a first frequency range, the method further comprises:
triggering a random access process in the first frequency range.

19. The method according to any one of claims 5 to 10 and 14, further comprising:
reporting information about frequency range switching to a network-side device.

20. The method according to claim 19, wherein the information about frequency range switching comprises at least one of the following:
indication information about frequency range switching;
a reason for frequency range switching;
indication information about a frequency range before switching;
indication information about a frequency range after switching;
a measurement result of the frequency range before switching; and
a measurement result of the frequency range after switching.

21. A service configuration method, applied to a network-side device, the method comprising:
sending configuration information about a frequency range in which at least one first service is located to a terminal.

22. The method according to claim 21, wherein the frequency range in which the first service is located comprises at least one of the following:
a frequency range in which service data of the first service is located; and
a frequency range in which control information about the first service is located.

23. The method according to claim 21 or 22, wherein the configuration information about the frequency range comprises at least one of the following:
a BWP identifier;
a frequency;
a bandwidth;
a frequency start position;
a frequency end position;
a physical resource block identifier; and
a physical resource block quantity identifier.

24. The method according to claim 21, further comprising:
receiving a frequency range in which a target first service that needs to be received by the terminal is located and sent by the terminal; and
in a case that a current operating frequency range of the terminal does not comprise or does not completely comprise the frequency range in which the target first service is located, sending a frequency range switching indication to the terminal, wherein the frequency range switching indication is used for instructing the terminal to switch the current operating frequency range to the frequency range in which the target first service is located.

25. The method according to claim 24, wherein the frequency range switching indication is sent through at least one piece of the following information: RRC reconfiguration information and DCI information.

26. The method according to claim 21, further comprising:
sending configuration information about an operating frequency range to the terminal, wherein the configuration information about the operating frequency range comprises an operating duration of the terminal in at least two frequency ranges, and at least one of the at least two frequency ranges comprises a frequency range in which a target first service is located.

27. The method according to claim 26, wherein the configuration information about the operating frequency range further comprises: a switching period of the operating frequency range.

28. The method according to claim 21, further comprising:
receiving information about switching a frequency range reported by the terminal.

29. The method according to claim 28, wherein the information about frequency range switching comprises at least one of the following:
indication information about frequency range switching;
a reason for frequency range switching;
indication information about a frequency range before switching;
indication information about a frequency range after switching;
a measurement result of the frequency range before switching; and
a measurement result of the frequency range after switching.

30. A terminal, comprising:
a first receiving module, configured to receive configuration information about a frequency range in which at least one first service is located; and
a second receiving module, configured to receive, in a case that a target first service in the at least one first service needs to be received, the target first service in a current operating frequency range or by switching from the current operating frequency range to a frequency range in which the target first service is located.

31. A network-side device, comprising:
a first sending module, configured to send configuration information about a frequency range in which at least one first service is located to a terminal.

32. A terminal, comprising a processor, a memory, and a program stored on the memory and executable on the processor, wherein the program, when executed by the processor, implements the steps of the service receiving method according to any one of claims 1 to 20.

33. A network-side device, comprising a processor, a memory, and a program stored on the memory and executable on the processor, wherein the program, when executed by the processor, implements the steps of the service configuration method according to any one of claims 21 to 29.

34. A computer-readable storage medium, the computer-readable storage medium storing a program, wherein the program, when executed by a processor, implements the steps of the service receiving method according to any one of claims 1 to 20; or the program, when executed by the processor, implements the steps of the service configuration method according to any of claims 21 to 29.
